(19) **Europäisches Patentamt European Patent Office Office européen des brevets**

(11) **EP 4 607 684 A1**

(12) **EUROPEAN PATENT APPLICATION**
published in accordance with Art. 153(4) EPC

(43) Date of publication:
**27.08.2025 Bulletin 2025/35**

(51) International Patent Classification (IPC):
**H01M 50/531** (2021.01)   **H01M 50/536** (2021.01)
**H01M 50/533** (2021.01)   **H01M 10/04** (2006.01)

(21) Application number: **24822854.6**

(52) Cooperative Patent Classification (CPC):
**H01M 50/536; H01M 50/15; H01M 50/503;
H01M 50/533; H01M 50/55;** Y02E 60/10

(22) Date of filing: **17.06.2024**

(86) International application number:
**PCT/CN2024/099620**

(87) International publication number:
**WO 2024/255907 (19.12.2024 Gazette 2024/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **16.06.2023 CN 202321545816 U**

(71) Applicant: **Eve Power Co., Ltd.
Jingmen, Hubei 448000 (CN)**

(72) Inventors:
• **HE, Xiaowu
Jingmen, Hubei 448000 (CN)**

• **SHU, Kuanjin
Jingmen, Hubei 448000 (CN)**
• **HUANG, Jinhai
Jingmen, Hubei 448000 (CN)**
• **ZHENG, Xu
Jingmen, Hubei 448000 (CN)**
• **AN, Suli
Jingmen, Hubei 448000 (CN)**
• **WANG, Junmin
Jingmen, Hubei 448000 (CN)**
• **HE, Wei
Jingmen, Hubei 448000 (CN)**

(74) Representative: **Berggren Oy
P.O. Box 16
Eteläinen Rautatiekatu 10A
00101 Helsinki (FI)**

(54) **BATTERY CELL**

(57) The application discloses a battery cell. The battery cell includes a top cover assembly, two cell packs and pins; the two cell packs are arranged side by side along a first direction, and tabs are respectively provided at two ends of each of the cell packs along a second direction; the pins are each include a first connection portion and a second connection portion; the first connection portion is connected to the top cover assembly, and the second connection portion includes two welding plates that are arranged at an interval and are perpendicular to the first direction, and two of the tabs of the two cell packs located on a same side are respectively connected to sides of the two welding plates facing away from each other, and a distance between surfaces of the two welding plates facing away from each other along the first direction is d.

FIG. 3

**Description**

This application claims the priority to and benefit of Chinese Patent Application No. 202321545816.3, filed with China Patent Office on June 16, 2023, the entire contents of which is incorporated herein by reference.

TECHNICAL FIELD

The present application relates to the technical field of battery and in particular to a battery cell.

BACKGROUND

In a battery cell, pins are usually used to connect the tabs of the cell pack to the top cover or poles of the battery cell, so that the current of the cell pack can be led out. In the related art, some kinds of battery cells each include two cell packs, and only one welding position is defined on the pins, and the tabs of the two cell packs are welded at the welding position. On one hand, the total thickness of the tabs of the two cell packs is large, resulting in that the parameters for welding are not easy to control, and the difficulty in welding is relatively large; on another hand, in order to ensure that the tabs of the two cell packs can be led out to the welding position, the tab lengths of the two cell packs need to be different, that is, the two cell packs need to be produced differently.

TECHNICAL PROBLEMS

When assembling the battery cells, it is necessary to distinguish between the two cell packs, which leads to low production efficiency of the battery cells. Therefore, a battery cell which can solve this technical problem is urgently needed.

TECHNICAL SOLUTIONS

The present application provides a battery cell, the pins of which can be conveniently connected to the tabs of two cell packs, and there is no need to distinguish between different cell packs during assembly, thereby reducing the difficulty in producing the battery cell and improving the efficiency in producing the battery cell.

This application adopts the following technical solutions:

A battery cell, including:

a top cover assembly;

two cell packs, arranged side by side along a first direction, wherein tabs are respectively provided at two ends of each of the cell packs along a second direction; and

pins, each including a first connection portion and a second connection portion, wherein the first connection portion is connected to the top cover assembly, and the second connection portion includes a connection plate and two welding plates connected to the connection plate, and wherein the second connection portion has a first state, in which the two welding plates are arranged at an interval and are both perpendicular to the first direction, and two of the tabs of the two cell packs located on a same side are respectively connected to sides of the two welding plates facing away from each other, and a distance d between surfaces of the two welding plates facing away from each other along the first direction satisfies:

$$\frac{T}{4} - \frac{b}{2} \leq \frac{d}{2} < \frac{T}{4} - \frac{b}{2} + 5mm\ ;$$

wherein, T is a thickness of the two cell packs along the first direction, and b is a thickness of each of the tabs along the first direction.

BENEFICIAL EFFECTS

In the battery cell according to the present application, the first connection portion of each pin is connected to the top cover assembly, and the second connection portion of the pin is formed with two welding plates. In the first state of the second connection portion, the tabs of the two cell packs located at a same side are respectively fitted and connected with the two welding plates, that is, two independent welding positions are formed on the pin, and the tabs of the two cell packs can be welded separately, which reduces the difficulty in welding. By limiting the distance d between the surfaces of the two welding plates facing away from each other along the first direction, it is ensured that when the two cell packs respectively have tabs at their center along the first direction, the tabs of the two cell packs just correspondingly connect to the two welding welds of the pin. That is to say, when the two cell packs of the same battery cell have exactly the same structures, they can be successfully connected with the two welding plates of the pin, thereby reducing the difficulty in producing the battery cell and improving the efficiency of producing the battery cell.

BRIEF DESCRIPTION OF THE DRAWINGS

FIG. 1 is a schematic diagram of the structure of a battery cell according to a embodiment of the present application;
FIG. 2 is an exploded view of a battery cell according to an embodiment of the present application;
FIG. 3 is a schematic diagram of a battery cell when the second connection portion of the pin is in a first state according to an embodiment of the present application;
FIG. 4 is a side view of the cell packs and pins according to an embodiment of the present application;
FIG. 5 is a schematic diagram of a battery cell when the second connection portion of the pin is in a second state according to an embodiment of the present application;
FIG. 6 is a top view of the cell packs and pins according to an embodiment of the present application.

In the figures:

1, top cover assembly; 11, cover body; 12, pole; 13, insulator; 14, pressing block;
2, cell pack; 21, tab;
3, pin; 31, first connection portion; 311, mounting hole; 32, second connection portion; 321, connection plate; 322, welding plate; 323, folding mark; 324, through hole;
4, case.

DETAILED DESCRIPTION OF THE EMBODIMENTS

In the description of this application, unless otherwise clearly specified and limited, the terms "connected", "coupled", and "fixed" should be understood in a broad sense, for example, it can be a fixed connection, a detachable connection, or an integral connection; it can be a mechanical connection or an electrical connection; it can be a direct connection or an indirect connection through an intermediate medium, it can be the internal connection of two elements or the interaction relationship between two elements. For those skilled in the art, the specific meanings of the above terms in this application can be understood according to specific circumstances.

In the description of this embodiment, the terms "upper", "lower", "right", etc., are based on the directions or positions shown in the drawings, and are only for the convenience of description and simplification of operation, rather than indicating or implying that the device or element referred to must have a specific direction, be constructed and operated in a specific direction, and therefore cannot be understood as limiting the present application. In addition, the terms "first" and "second" are only used to distinguish in the description and have no special meaning.

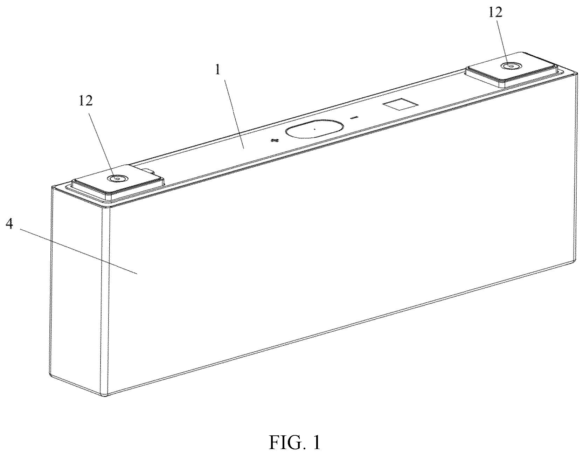

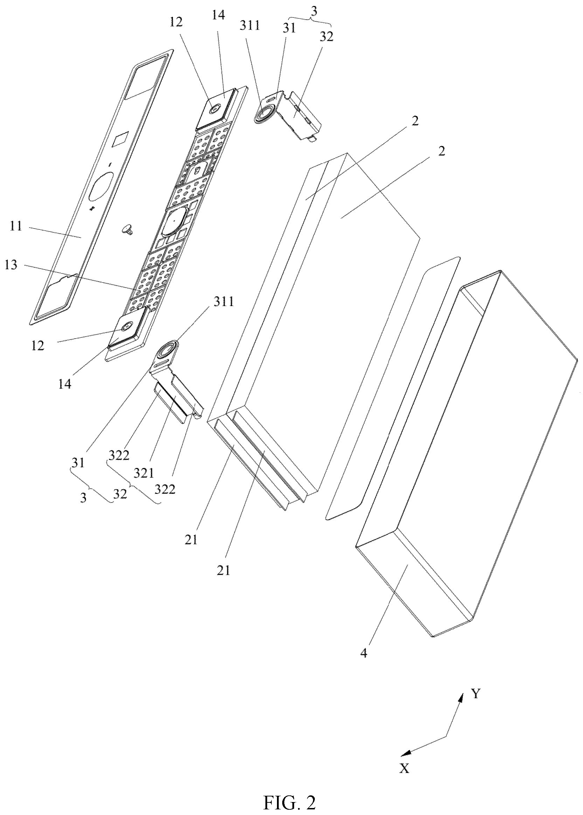

The present embodiment provides a battery cell, as shown in FIGs. 1 and 2, the battery cell includes a top cover assembly 1, a case 4, two cell packs 2 and two pins 3. The case 4 forms a box structure with one side open, the two cell packs 2 are arranged in the case 4, the two pins 3 are configured to achieve the electrical connection between the cell packs 2 and the top cover assembly 1, and the top cover assembly 1 can block the opening of the case 4, so that the battery cell forms a closed state. Usually, a layer of insulating film is provided on the inner wall of the case 4. As shown in FIG. 2, the top cover assembly 1 includes a cover body 11 and two poles 12, the two poles 12 are respectively a positive pole and a negative pole, and the two pins 3 are respectively connected to the two poles 12, so as to lead out the current of the cell pack 2. The top cover assembly 1 also includes an insulator 13, and the insulator 13 covers the inner and outer sides of the cover body 11. It can be understood that the top cover assembly 1 also includes a liquid injection structure, an explosion-proof structure, etc.

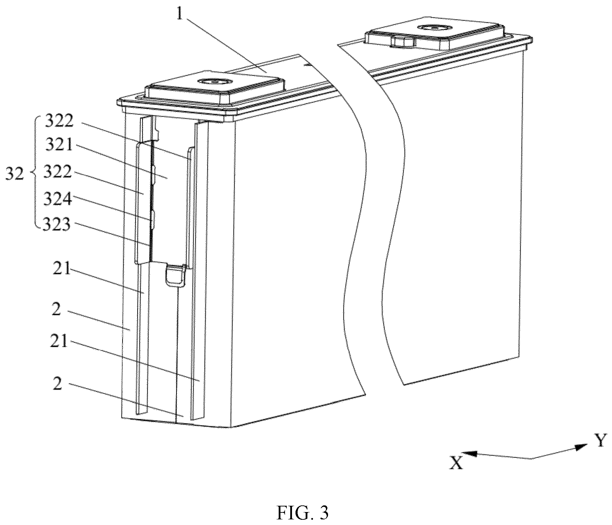

As shown in FIGs. 2 and 3, the two cell packs 2 are arranged side by side along a first direction (i.e., the X direction in FIG. 2), and each cell pack 2 includes two tabs 21, and the two tabs 21 of each cell pack 2 extend out from the two ends of the cell pack 2 along the second direction (i.e., the Y direction in FIG. 2). It can be understood that the two tabs 21 of the cell pack 2 are respectively a positive tab and a negative tab. In this embodiment, the positive tabs of the two cell packs 2 are located at a same side, and the negative tabs of the two cell packs 2 are located at another same side. The two positive tabs are connected to the positive pole through a pin 3, and the two negative tabs are connected to the negative pole through another pin 3. In this embodiment, as shown in FIG. 2, in the initial state of the cell packs 2 (i.e., before the cell packs 2 are connected to the pins 3), the planes where the tabs 21 are located are perpendicular to the first direction.

The first direction is parallel to the narrow side of the four sides of the battery cell. Specifically, the first direction may be perpendicular to the wide side of the four sides of the battery cell. The second direction is parallel to the wide side of the four sides of the battery cell. Specifically, the second direction may be perpendicular to the narrow side of the four sides of the battery cell.

As shown in FIGs. 2 and 3, each pin 3 includes a first connection portion 31 and a second connection portion 32. The first connection portion 31 is connected to a pole 12 of the top cover assembly 1, and the second connection portion 32 is configured to connect to the two tabs 21 of the two cell packs 2 at a same side. In this embodiment, as shown in FIG. 2, the top cover assembly 1 also includes two pressing blocks 14 and fasteners. The two pressing blocks 14 are respectively arranged corresponding to the two first connection portions 31. Each pressing block 14 and the corresponding first connection portion 31 are respectively arranged on both sides of the cover body 11. Each first connection portion 31 defines a mounting hole 311, to which an end of the corresponding pole 12 is riveted or welded, and the other end of the pole 12 is riveted or welded to the corresponding pressing block 14 after passing through the cover body 11.

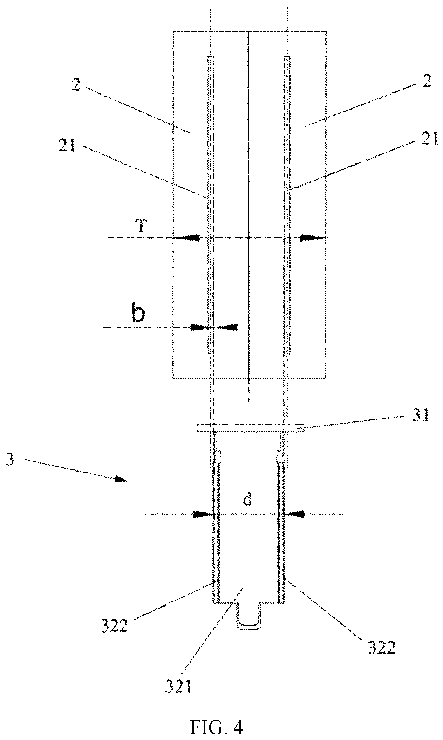

As shown in FIGs. 2 and 3, the second connection portion 32 includes a connection plate 321 and two welding plates 322. The connection plate 321 is connected to the first connection portion 31, and the two welding plates 322 are connected to the connection plate 321. The second connection portion 32 has a first state. In the first state, the two welding plates 322 are parallel and spaced apart, and the planes where the welding plates 322 are located are perpendicular to the first direction. The two tabs 21 at a same side of the two cell packs 2 are respectively connected to the sides of the two welding plates 322 that are away from each other. As shown in FIG. 4, the distance d between the surfaces of the two welding plates 322 that are away from each other along the first direction satisfies the formula:

$$\frac{T}{4}-\frac{b}{2}\leq\frac{d}{2}<\frac{T}{4}-\frac{b}{2}+5mm \qquad \text{Formula (1)}$$

where, T is the thickness of the two cell packs 2 along the first direction, and b is the thickness of each tab 21 along the first direction. **In** some embodiments, each tab 21 is formed by stacking multiple layers of material. In this case, the thickness b of the tab 21 along the first direction satisfies: b = mh, where m is the number of layers of material and h is the thickness of each layer of material.

**In** the battery cell according to the present embodiment, in the first state of each pin 3, the tabs 21 are arranged in parallel with the welding plates 322, and the corresponding tabs 21 of the two cell packs 2 located at a same side are respectively fitted and connected with the two welding plates 322, that is, two independent welding positions are formed on the pin 3, which enable the tabs 21 of the two cell packs 2 to be welded separately, thereby reducing the difficulty in welding. By limiting the distance d between the surfaces of the two welding plates 322 that are away from each other along the first direction, it is ensured that when the two cell packs 2 respectively have tabs 21 at their center along the first direction, the tabs 21 of the two cell packs 2 just correspondingly connect to the two welding welds of the pin 3. That is to say, when the two cell packs 2 of the same battery cell have exactly the same structures, they can be successfully connected with the two welding plates 322 of the pin 3, thereby reducing the difficulty in producing the battery cell and improving the efficiency of producing the battery cell.

**In** this embodiment, as shown in FIG. 3, each tab 21 is welded to the corresponding welding plate 322 when the second connection portion 32 is in the first state (i.e., the state shown in FIG. 3). **In** this state, the tab 21 is fitted and connected to the corresponding welding plate 322, which facilitates the welding operation.

Specifically, as shown in FIG. 4, when $\frac{d}{2}=\frac{T}{4}-\frac{b}{2}$, the inner surface of the tab 21 (i.e., the surface of the tab 21 facing the other tab 21) just fits and connects with the outer surface of the corresponding welding plate 322 (i.e., the surface of the welding plate 322 facing away from the other welding plate 322). The 5 mm in Formula (1) means that the welding plate 322 can be offset to the tab 21 close to the corresponding side within a certain range. In this case, a certain extrusion force is generated between the welding plate 322 and the corresponding tab 21, thereby making the welding plate 322 and the tab 21 fit more closely, which not only improves the convenience of welding the two, but also improves the reliability of the connection between the two.

In some embodiments, if the tab 21 connected to the welding plate 322 is a negative tab, the distance d between the surfaces of the two welding plates 322 that are away from each other along the first direction satisfies:

$$\frac{T}{4}-\frac{b}{2}\leq\frac{d}{2}<\frac{T}{4}-\frac{b}{2}+3mm \qquad \text{Formula (2)}$$

Generally, the negative tab is made of copper material, which has a relatively low hardness. In this embodiment, the margin in Formula (2) is set to 3 mm for the negative tab, which can prevent the welding plate 322 from being offset too much and causing the corresponding negative tab to be deformed greatly, thereby preventing the negative tab from being torn.

In some embodiments, if the tab 21 connected to the welding plate 322 is a positive tab, the distance d between the surfaces of the two welding plates 322 that are away from each other along the first direction satisfies:

$$\frac{T}{4}-\frac{b}{2}\leq\frac{d}{2}<\frac{T}{4}-\frac{b}{2}+1mm \qquad \text{Formula (3)}$$

By setting the distance d within this range, it is possible to ensure that the positive tab is accurately fitted and connected to the corresponding welding plate 322 and maintains a certain pressing force, and the positive tab will not be deformed too much and torn.

In some embodiments, if the tab 21 connected to the welding plate 322 is a negative tab, the distance d between the surfaces of the two welding plates 322 that are away from each other along the first direction satisfies:

$$\frac{T}{4}-\frac{b}{2}\leq\frac{d}{2}<\frac{T}{4}-\frac{b}{2}+0.5mm \qquad \text{Formula (4)}$$

By setting the distance d within this range, it is possible to ensure that the negative tab is accurately fitted and connected to the corresponding welding plate 322 and maintains a certain pressing force, and the negative tab will not be excessively deformed and torn.

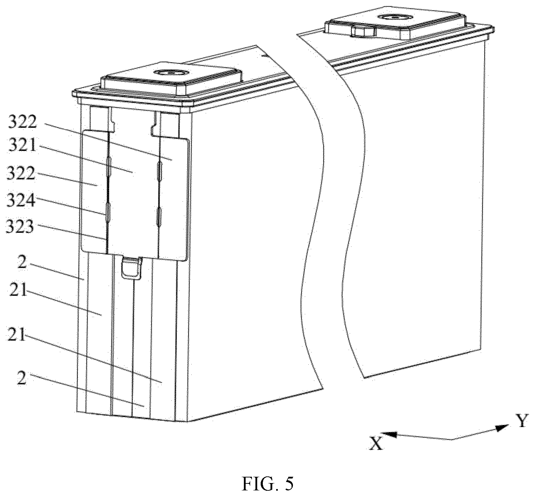

As shown in FIG.5, the second connection portion 32 of each pin 3 also has a second state. In the second state, the two welding plates 322 and the connection plate 321 are arranged coplanarly and perpendicular to the second direction. This arrangement makes the structure formed by the pin 3 and the cell packs 2 compact, and when it is installed in the case 4, the volume of the entire battery cell is small, thereby improving the energy density of the battery cell. Optionally, the second connection portion 32 can be switched from the first state to the second state by bending the welding plates 322 and the corresponding tabs 21.

In this embodiment, the connection plate 321 and the two welding plates 322 are integrally formed by one plate. Before the pin 3 is connected to the tabs 21, the pin 3 is placed in a first state by bending, and after the second connection portion 32 is welded to the corresponding tabs 21, the welding plates 322 are bent to the second state.

As shown in FIG. 5, a folding mark 323 is provided between each welding plate 322 and the corresponding connection plate 321, so that it is easier for the welding plate 322 to be bent relative to the connection plate 321. In some embodiments, a through hole 324 is defined at the folding mark 323, and the convenience of bending the welding plate 322 can be further improved by providing the through hole 324. Optionally, the through hole 324 is a long strip hole, and the through hole 324 extends along the length direction of the folding mark 323. Usually, the pin 3 connected to the negative tab is made of copper material, which is soft in hardness, and thus the through hole 342 may not be defined on the pin 3. The pin 3 connected to the positive tab is made of aluminum material, which is hard in hardness, and thus the through hole 342 may be defined on the pin 3.

As shown in FIG. 5, in the second state, the size of the second connection portion 32 along the first direction is less than or equal to the thickness T of the two cell packs 2 in the first direction. Therefore, when the cell packs 2 and the pins 3 are installed into the case 4, the welding plates 322 will not scratch the insulating film inside the case 4, thereby improving the safety of the battery cell.

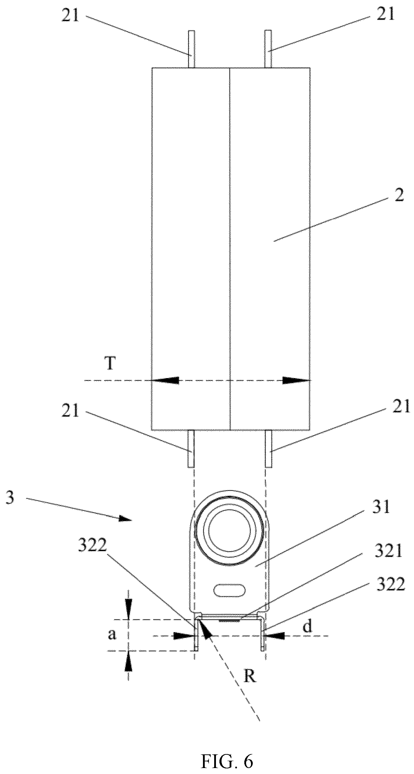

In order to ensure that the size of the second connection portion 32 along the first direction is less than or equal to T after the pin 3 is switched to the second state, in the first state as shown in FIG. 6, the width a of the welding plate 322 in the second direction satisfies the formula:

$$d-2R+\pi R+2a<T \qquad \text{Formula (5)}$$

where, R is the radius of the inner fillet formed between the welding plate 322 and the connection plate 321. By making the pin 3 satisfy Formula (5) in the first state, after the second connection portion 32 of the pin 3 is switched to the second state, the size of the second connection portion 32 along the first direction is smaller than T.

**Claims**

1. A battery cell, comprising:

   a top cover assembly (1);
   two cell packs (2), arranged side by side along a first direction, wherein tabs (21) are respectively provided at two ends of each of the cell packs (2) along a second direction; and
   pins (3), each comprising a first connection portion (31) and a second connection portion (32), wherein the first connection portion (31) is connected to the top cover assembly (1), and the second connection portion (32) comprises a connection plate (321) and two welding plates (322) connected to the connection plate (321), and wherein the second connection portion (322) has a first state, in which the two welding plates (322) are arranged at an interval and are both perpendicular to the first direction, and two of the tabs (21) of the two cell packs (2) located on a same side are respectively connected to sides of the two welding plates (322) facing away from each other, and a distance d between surfaces of the two welding plates (322) facing away from each other along the first direction satisfies:

   $$\frac{T}{4} - \frac{b}{2} \leq \frac{d}{2} < \frac{T}{4} - \frac{b}{2} + 5mm \ ;$$

   wherein, T is a thickness of the two cell packs (2) along the first direction, and b is a thickness of each of the tabs (21) along the first direction.

2. The battery cell according to claim 1, wherein the tabs (21) are welded to the corresponding welding plates (322) when the second connection portion (32) is in the first state.

3. The battery cell according to claim 1, wherein if the tabs (21) connected to the corresponding welding plates (322) are negative tabs, the distance d between the surfaces of the two welding plates (322) facing away from each other along the first direction satisfies:

   $$\frac{T}{4} - \frac{b}{2} \leq \frac{d}{2} < \frac{T}{4} - \frac{b}{2} + 5mm \ .$$

4. The battery cell according to claim 1, wherein if the tabs (21) connected to the welding plates (322) are positive tabs, the distance d between the surfaces of the two welding plates (322) facing away from each other along the first direction satisfies:

   $$\frac{d}{2} = \frac{T}{4} - \frac{b}{2} \ ;$$

   and/or
   wherein if the tabs (21) connected to the welding plates (322) are negative tabs, the distance d between the surfaces of the two welding plates (322) facing away from each other along the first direction satisfies:

   $$\frac{T}{4} - \frac{b}{2} \leq \frac{d}{2} < \frac{T}{4} - \frac{b}{2} + 3mm \ .$$

5. The battery cell according to any one of claims 1 to 4, wherein the second connection portion (32) has a second state, in which the two welding plates (322) are coplanar with the connection plate (321) and perpendicular to the second direction.

6. The battery cell according to claim 5, wherein, in the second state, a size of the second connection portion (32) along the first direction is less than or equal to the thickness T of the two cell packs (2) in the first direction.

7. The battery cell according to claim 5 or 6, wherein in the first state, a width a of each of the two welding plates (322) in the second direction satisfies:

$$d-2R+\pi R+2a<T;$$

wherein, R is a radius of an inner fillet formed between the welding plate (322) and the connection plate (321).

8. The battery cell according to any one of claims 5 to 7, wherein the two welding plates (322) and the connection plate (321) are integrally formed, and a folding mark (323) is formed between the two welding plates (322) and the connection plate (321).

9. The battery cell according to claim 8, wherein a through hole (324) is defined at the folding mark (323).

10. The battery cell according to any one of claims 1 to 9, wherein the top cover assembly (1) comprises a cover body (11) and poles (12), and wherein the poles (12) each pass through the cover body (11) and are connected to the corresponding first connection portion (31).

FIG. 1

FIG. 2

FIG. 3

FIG. 4

FIG. 5

FIG. 6

## INTERNATIONAL SEARCH REPORT

| International application No. |
|---|
| **PCT/CN2024/099620** |

| A. | CLASSIFICATION OF SUBJECT MATTER |
|---|---|

H01M50/531(2021.01)i;  H01M50/536(2021.01)i;  H01M50/533(2021.01)i;  H01M10/04(2006.01)i

According to International Patent Classification (IPC) or to both national classification and IPC

| B. | FIELDS SEARCHED |
|---|---|

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; DWPI; WPABS; ENTXT; CNKI; 万方, WANFANG; Elsevier Science: 电池, 电芯, 芯包, 引脚, 极耳, 焊接板, 垂直, 贴合, 距离, 厚度, 对接, 区分, 效率, battery, cell, core package, pin, tab, welding plate, vertical, adhere, connect, distance, thickness, mating, difference, efficiency

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 220291021 U (EVE POWER CO., LTD.) 02 January 2024 (2024-01-02)<br>description, paragraphs 0004-0068, and figures 1-6 | 1-10 |
| A | CN 111106300 A (CONTEMPORARY AMPEREX TECHNOLOGY CO., LTD.) 05 May 2020 (2020-05-05)<br>description, paragraphs 0034-0112, and figures 1-28 | 1-10 |
| A | CN 216648532 U (JIANGSU ZENERGY BATTERY TECHNOLOGY CO., LTD.) 31 May 2022 (2022-05-31)<br>entire description | 1-10 |
| A | CN 218548723 U (SUZHOU QINGTAO NEW ENERGY TECHNOLOGY CO., LTD.) 28 February 2023 (2023-02-28)<br>entire description | 1-10 |
| A | CN 218769982 U (EVE POWER CO., LTD.) 28 March 2023 (2023-03-28)<br>entire description | 1-10 |
| A | JP 2016054022 A (TOYOTA INDUSTRIES CORP.) 14 April 2016 (2016-04-14)<br>entire description | 1-10 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 August 2024** | **22 August 2024** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/099620**

| Patent document cited in search report | | | Publication date (day/month/year) | Patent family member(s) | | | Publication date (day/month/year) |
|---|---|---|---|---|---|---|---|
| CN | 220291021 | U | 02 January 2024 | None | | | |
| CN | 111106300 | A | 05 May 2020 | EP | 3690988 | A1 | 05 August 2020 |
| | | | | WO | 2020156198 | A1 | 06 August 2020 |
| | | | | US | 2020243896 | A1 | 30 July 2020 |
| | | | | US | 11811017 | B2 | 07 November 2023 |
| | | | | CN | 111106300 | B | 11 May 2021 |
| CN | 216648532 | U | 31 May 2022 | None | | | |
| CN | 218548723 | U | 28 February 2023 | None | | | |
| CN | 218769982 | U | 28 March 2023 | None | | | |
| JP | 2016054022 | A | 14 April 2016 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202321545816